# EUROPÄISCHE PATENTSCHRIFT

(11) **EP 1 628 026 B1**
(45) Veröffentlichungstag und Bekanntmachung des Hinweises auf die Patenterteilung: **05.03.2008**
(21) Anmeldenummer: 05016498.7
(22) Anmeldetag: 29.07.2005
(51) Int. Cl.: F16D 11/10, F16D 23/02

(54) **Fahrzeuggetriebe**
Vehicle transmission
Boîte de vitesses de véhicule

(30) Priorität: 18.08.2004 DE 102004040230
(43) Veröffentlichungstag der Anmeldung: 22.02.2006
(73) Patentinhaber: Bayerische Motoren Werke Aktiengesellschaft, 80809 München (DE)
(72) Erfinder: Martin, Alexander, 80802 München (DE)

(56) Entgegenhaltungen:
- DE-B- 1 020 873
- DE-B- 1 073 249
- DE-C2- 3 939 274
- DE-U- 1 708 561
- GB-A- 789 938
- US-A- 4 294 338

## Beschreibung

Die vorliegende Erfindung betrifft eine schaltbare Zahnradstufe gemäß den Merkmalen des Patentanspruches 1 sowie ein Getriebe gemäß den Merkmalen des Patentanspruches 25.

Aus der DE 39 39 274 C2 ist ein Schaltgetriebe mit zwei schaltbaren Zahnradstufen bekannt. Das Getriebe weist eine Getriebewelle auf, auf der ein Getriebezahnrad drehbar gelagert ist. Ferner ist ein Schaltelement" in Form einer Schiebemuffe vorgesehen, die in einer Axialrichtung der Getriebewelle verschiebbar ist. Zwischen der Schiebemuffe und dem Zahnrad ist eine Synchronisierungseinrichtung mit konusförmigen Anlaufflächen angeordnet. Die Schiebemuffe kann im wesentlichen drei Schaltstellungen einnehmen, nämlich eine erste Schaltstellung, die auch als Mittel- bzw. Neutralstellung bezeichnet werden kann, in der das Getriebezahnrad ungehindert relativ zu der Getriebewelle drehbar ist, eine zweite Schaltstellung, in der die Synchronisierungseinrichtung greift und das Getriebezahnrad auf die Drehzahl der Getriebewelle bringt sowie eine dritte Schaltstellung, in der das Getriebezahnrad über die Schiebemuffe mit der Getriebewelle drehgekoppelt ist. Will man bei diesem Getriebe einen Gang einlegen, so muss die Schiebemuffe aus ihrer ersten Schaltstellung in die zweite Schaltstellung verschoben werden, wobei das Zahnrad synchronisiert wird. Zum Einlegen des Ganges muss die Schiebemuffe in die selbe Richtung weiterverschoben werden. Bei herkömmlichen Schaltgetrieben ist zur Überwachung des Synchronvorgangs z.B. ein Sperrring vorgesehen, der frei auf der Getriebewelle drehbar ist. Während eines Schaltvorgangs wird der Sperrring zunächst gegen die Synchronkörper gedrückt. Der Sperrring verhindert ein Einlegen des Ganges, solange die Synchronisierung noch nicht abgeschlossen ist.

Bei Handschaltgetrieben ist die Schiebemuffe mechanisch über ein Schaltgestänge mit dem Schalthebel gekoppelt. Bei automatisierten Handschaltgetrieben erfolgt der Gangwechsel durch hydraulische, elektrische oder pneumatische Aktuatoren. Die Schaltkraft wird dabei über Hebel, Schwingen, Kurvenscheiben o. ä. an die Schiebemuffe des jeweiligen Gangpaars weitergeleitet und dort in eine translatorische Bewegung der Schiebemuffe umgesetzt. Die "innere Schaltung" herkömmlicher automatisierter Handschaltgetriebe weist also eine Vielzahl von Bauteilen auf, was sich ungünstig auf das Gewicht des Getriebes auswirkt. Außerdem beanspruchen die Bauteile erheblichen Bauraum. Da bei herkömmlichen automatisierten Schaltgetrieben zwei Gänge von ein- und derselben Schiebemuffe geschaltet werden, können zeitlich überschneidende Schaltungen dieser Gänge nicht durchgeführt werden.

Aufgabe der Erfindung ist es, eine schaltbare Zahnradstufe zu schaffen, die kompakt aufgebaut ist und die schnelle Schaltzeiten ermöglicht. Eine weitere Aufgabe der Erfindung besteht in der Schaffung eines Getriebes, das mehrere solcher Zahnradstufen aufweist.

Diese Aufgabe wird durch die Merkmale der Patentansprüche 1 bzw. 25 gelöst. Vorteilhafte Ausgestaltungen und Weiterbildungen der Erfindung sind den Unteransprüchen zu entnehmen.

Ausgangspunkt der Erfindung ist eine schaltbare Zahnradstufe, die eine Getriebewelle und ein drehbar zu der Getriebewelle angeordnetes Getriebezahnrad aufweist. Ferner ist ein Schaltelement vorgesehen, das parallel zu einer Axialrichtung der Getriebewelle relativ zur Getriebewelle verschiebbar ist. Des Weiteren ist eine Synchronisiereinrichtung vorgesehen, die durch Verschieben des Schaltelements von einem "Passivzustand" in einen "Aktivzustand" geschaltet werden kann, oder umgekehrt. Der Aktivzustand ist dazu vorgesehen, die Getriebewelle und das Getriebezahnrad auf ein und dieselbe Drehzahl zu bringen, d. h. zu synchronisieren. Das Schaltelement kann folgende Schaltstellungen einnehmen:
- eine erste Schaltstellung, in der die Getriebewelle und das Getriebezahnrad ungehindert relativ zueinander drehbar sind,
- eine zweite Schaltstellung, in der sich die Synchronisierungseinrichtung in ihrem Aktivzustand befindet und
- eine dritte Schaltstellung, in der das Getriebezahnrad drehfest mit der Getriebewelle gekoppelt ist.

Der Kern der Erfindung besteht darin, dass das Schaltelement ausgehend von seiner ersten Schaltstellung, in der das Getriebezahnrad ungehindert auf der Getriebewelle drehbar ist, zum Synchronisieren in eine erste Verschieberichtung und zum Einlegen des Ganges in eine zweite Verschieberichtung verschoben wird, die der ersten Verschieberichtung entgegengesetzt ist. Die Synchrondrehzahl wird dabei über Drehzahlsensoren ermittelt. Der Synchronisierungsvorgang kann somit durch eine Elektronik geregelt werden. Ein Sperrring, wie er bei herkömmlichen automatisierten Schaltgetrieben vorzufinden ist, ist nicht erforderlich.

Im folgenden wird die Erfindung im Zusammenhang mit der Zeichnung näher erläutert. Es zeigen:
- Figur 1: einen Querschnitt einer schaltbaren Zahnradstufe gemäß der Erfindung;
- Figur 2-4: drei verschiedene Schaltstellungen der Zahnradstufe der Figur 1;
- Figur 5: die Einzelkomponenten der Zahnradstufe der Figur 1 in Explosionsdarstellung;
- Figur 6: die Aktuatorik eines Zahnradstufenpaars gemäß der Erfindung;
- Figur 7: einen Teilschnitt durch die Aktuatorik eines Zahnradstufenpaars gemäß Figur 6; und
- Figur 8: ein Sechsganggetriebe zur Erläuterung des Schaltverfahrens gemäß der Erfindung.

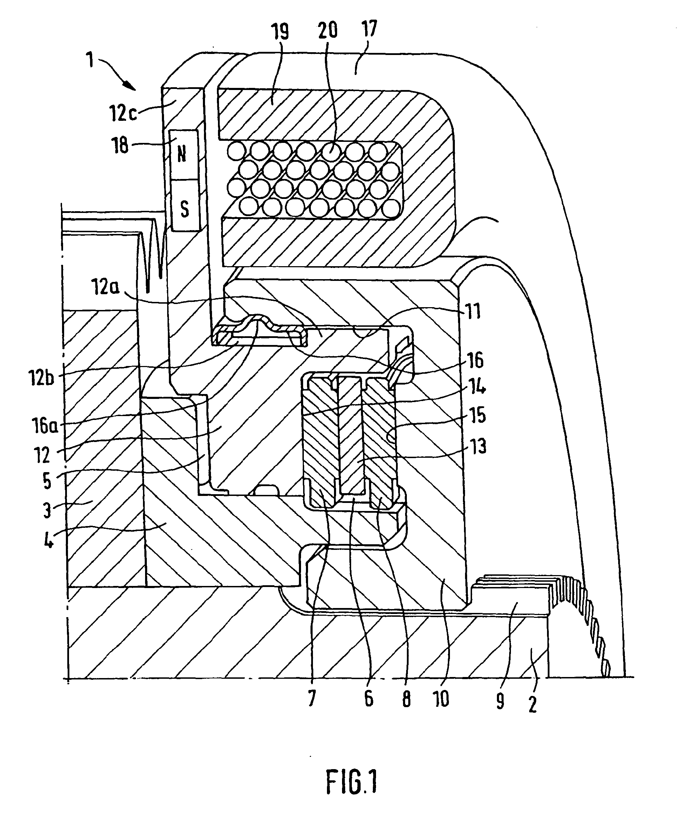

Figur 1 zeigt eine Schaltungsanordnung 1 mit einer Getriebewelle 2 und einem auf der Getriebewelle 2 drehbar angeordneten Getriebezahnrad 3. Das Getriebezahnrad 3 ist in axialer Richtung auf der Getriebewelle 2 festgelegt. Ferner ist auf der Getriebewelle 2 ein Kopplungsrad 4 angeordnet, das drehfest mit dem Getriebezahnrad 3 verbunden ist. Das Kopplungsrad 4 weist an seiner dem Getriebezahnrad 3 abgewandten Stirnseite eine Verzahnung 5 auf. Die Zähne der Verzahnung 5 verlaufen in Radialrichtung des Kopplungsrads 4. Das Kopplungsrad 4 weist ferner an seinem dem Getriebezahnrad 3 abgewandten Ende an seiner radialen Außenseite eine Längsverzahnung 6 auf. In die Längsverzahnung 6 des Kopplungsrads 4 greifen Lamellen 7, 8 ein.

Die Getriebewelle 2 weist eine Keilverzahnung 9 auf, auf die ein topfartiges "Mitnehmerelement" 10 aufgeschoben ist. Das Mitnehmerelement ist über die Keilverzahnung 9 drehfest mit der Getriebewelle 2 verbunden. Zusätzlich ist das Mitnehmerelement 10 in hier nicht näher dargestellter Weise axial auf der Getriebewelle 2 festgelegt. An einer inneren Wandung 11 des Mitnehmerelements ist eine sich in Längsrichtung der Getriebewelle 2 erstreckende Innenverzahnung (nicht dargestellt) vorgesehen. In das topfförmige Mitnehmerelement 10 ist ein als "Schiebemuffe" fungierendes Schaltelement 12 teilweise eingeschoben. Ein in das Mitnehmerelement 10 eingeschobener Abschnitt 12a des Schaltelements 12 weist an seiner radialen Außenseite eine Außenverzahnung (nicht dargestellt) auf, welche in die Innenverzahnung eingreift, die an der radialen Innenseite des Mitnehmerelements vorgesehen ist.

An einer radialen Innenseite des Abschnitts 12a des Schaltelements 12 ist eine sich in Längsrichtung der Getriebewelle 2 erstreckende Verzahnung vorgesehen, in die eine Lamelle 13 eingesetzt ist, welche in den Bereich zwischen den Lamellen 7, 8 ragt. Die Lamellen 7, 8, 13 sowie stirnseitige Reibflächen 14, 15 an dem Schaltelement 12 bzw. an dem Mitnehmerelement 10 bilden eine "Lamellenbremse", deren Funktion später noch näher erläutert wird.

Das Schaltelement 12 weist ferner eine Ausnehmung 12b auf, in die ein Federelement 16 eingesetzt ist. Das Federelement hat in der hier gezeigten Ansicht die Form eines U, mit zwei kurzen seitlichen Schenkeln und einem Mittel- bzw. Verbindungsabschnitt. Der Mittel- Verbindungsabschnitt weist eine Ausbuchtung 16a auf, die in eine Rastausnehmung eingreift, welche an der radialen Innenseite der "Wandung" des Mitnehmerelements 10 eingerastet ist.

Das Schaltelement 12 weist ferner an seiner dem Kopplungsrad 4 zugewandten Stirnseite eine Verzahnung auf. Die Zähne dieser Verzahnung verlaufen in Radialrichtung. In der hier gezeigten Stellung des Schaltelements 12 sind die Zähne des Schaltelements 12 aus der Verzahnung des Kopplungsrads 4 ausgerückt. Das Schaltelement 12 ist also nicht mit dem Kopplungsrad 4 bzw. mit dem Getriebezahnrad 3 drehgekoppelt, sondern befindet sich in seiner Neutralstellung. Da das Schaltelement 12 wiederum drehgekoppelt mit dem Mitnehmerelement 11 ist, ist die Getriebewelle 2 in der hier gezeigten Stellung des Schaltelements 12 drehgekoppelt mit dem Getriebezahnrad 3.

Das Schaltelement 12 weist ferner einen ringscheibenförmigen Abschnitt 12c auf, der als Anker fungiert und der mit einem Elektromagneten 17 zusammenwirkt. In den ringscheibenförmigen Abschnitt 12c Schaltelements ist ein Ringmagnet 18 integriert. Der Ringmagnet 18 ist bei dem hier gezeigten Ausführungsbeispiel so magnetisiert, dass der Nordpol N radial außerhalb des Südpols S liegt. Selbstverständlich ist auch eine umgekehrte Polung möglich.

Der bereits erwähnte Elektromagnet 17 weist ein Joch 19 und eine darin angeordnete Spule 20 auf. Das Joch 19 hat bei dem hier gezeigten Ausführungsbeispiel einen U-förmigen Querschnitt. Es erstreckt sich ringförmig um das Mitnehmerelement 10 herum. Die Spulenwindungen sind zwischen den Schenkeln des U-förmigen Jochs 19 angeordnet.

Wenn der Elektromagnet 17 bestromt wird, wird der als Anker fungierende ringscheibenförmige Abschnitt 12c des Schaltelements 12 angezogen oder abgestoßen. In Abhängigkeit von der Richtung des Spulenstroms kann das Schaltelement 12 also nach links in Richtung des Getriebezahnrads 3 verschoben oder nach rechts in Richtung des Mitnehmerelements 10 gezogen werden.

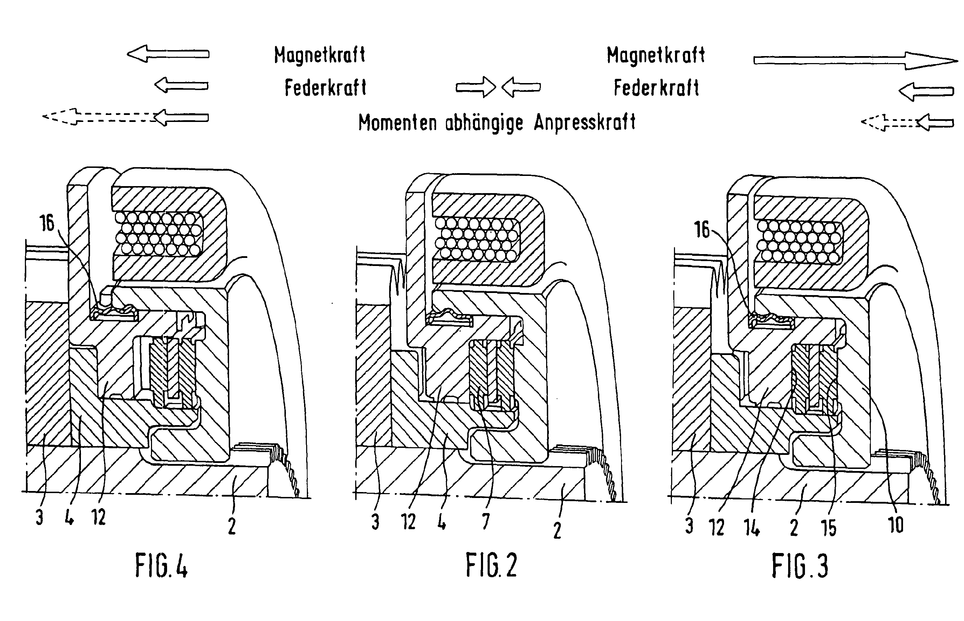

Die Figuren 2-4 zeigen verschiedene Schaltstellungen des Schaltelements 12. Figur 2 zeigt eine erste Stellung, die auch als Neutralstellung bezeichnet werden kann. In der Neutralstellung kann sich das Getriebezahnrad 3 ungehindert auf der Getriebewelle 2 drehen, da das Schaltelement 12 nicht in die Verzahnung des Kopplungsrads 4 eingreift und die stirnseitige Reibfläche 14 (vgl. Figur 1) auch nicht gegen die Lamelle 7 drückt. Das Getriebezahnrad 3 läuft also im "Leerlauf".

Durch Bestromen des Elektromagneten 17 kann das Schaltelement 12 entgegen der Kraft des Federelements 16 nach rechts gezogen werden, so dass die Lamellen 7, 8, 13 (vgl. Figur 1) durch die stirnseitigen Reibflächen 14, 15 des Schaltelements 12 bzw. des Mitnehmerelements 10 zusammengedrückt werden. Die Lamellen 7, 8, 13 und die stirnseitigen Reibflächen 14, 15 fungieren hierbei als Synchronisierungseinrichtung. Während des Synchronisierungsvorgangs werden die Getriebewelle 2 und das Getriebezahnrad 3 auf Synchrondrehzahl gebracht. Wenn der Elektromagnet 17 ausgeschaltet wird, drückt das Federelement 16 das Schaltelement 12 wieder zurück nach links in seine in Figur 2 gezeigte Neutralstellung.

Durch Umpolen des Elektromagneten kann das Schaltelement 12 nach links gedrückt werden, was in Figur 4 dargestellt ist. Der Elektromagnet 17 überwindet dabei die Kraft des Federelements 16, wobei die Ausbuchtung 16a (vgl. Figur 1) des Federelements 16 aus der an der Innenseite des Mitnehmerelements 10 vorgesehen Rastnut herausgedrückt wird. Beim nach links Verschieben des Schaltelements 12 greift die an der Stirnseite des Schaltelements 12 vorgesehen "Radialverzahnung" in die Verzahnung 5 (vgl. Figur 1) des Kopplungsrads 4 ein. Dadurch wird die Getriebewelle 2 formschlüssig mit dem Getriebezahnrad 3 gekoppelt. Das "nach links Verschieben" des Schaltelements 12 von der in Figur 2 gezeigten Stellung in die in Figur 3 gezeigte Stellung kann also als "Gang einlegen" interpretiert werden.

Durch erneutes Umpolen des Elektromagneten 17 kann das Schaltelement 12 wieder in die in Figur 2 gezeigte Neutralstellung gezogen werden.

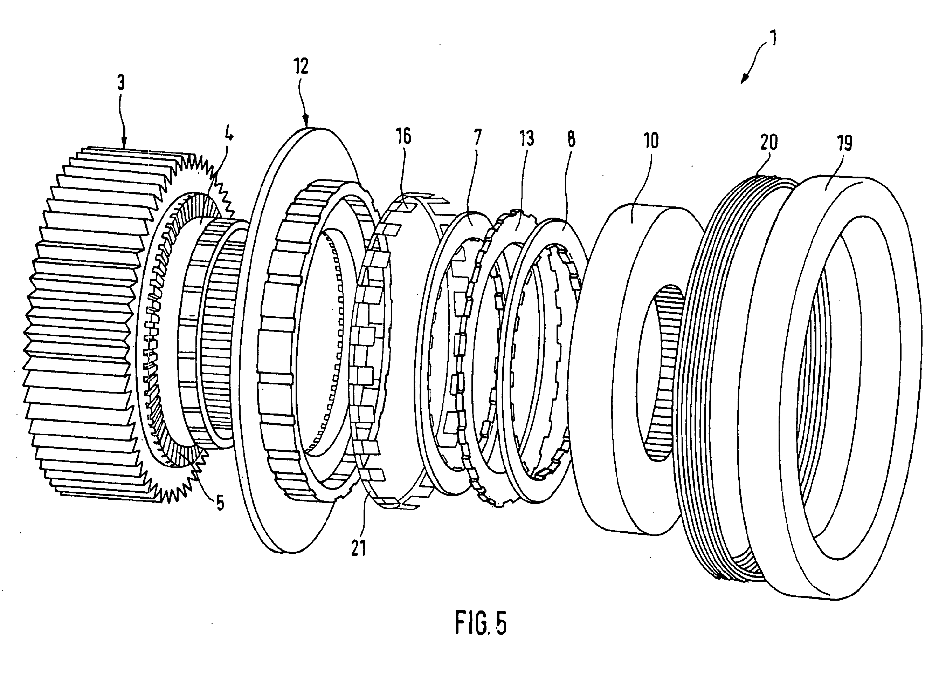

Figur 5 zeigt die Schaltungsanordnung 1 der Figur 1 in Explosionsdarstellung. In Figur 5 ist besonders deutlich die Verzahnung 5 des Kopplungsrads 4 zu sehen, die bei eingelegtem Gang in eine zugeordnete Gegenverzahnung eingreift, die an der in Figur 5 verdeckten Stirnseite des Schaltelements 12 vorgesehen ist. Ferner ist zu erkennen, dass die Schaltungsanordnung nicht nur ein Federelement 16 aufweist, sondern eine Vielzahl solcher Federelemente, die an einem Ring 21 angeordnet sind.

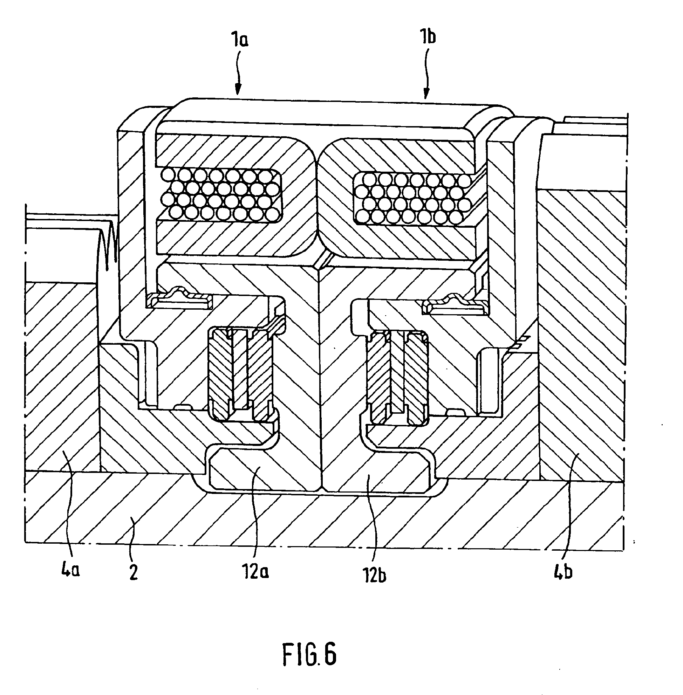

Figur 6 zeigt ein Ausführungsbeispiel mit zwei symmetrisch angeordneten Schaltungsanordnungen 1 a, 1 b. Die Schaltungsanordnungen 1 a, 1 b sind im wesentlichen identisch aufgebaut. Die Schaltungsanordnung 1a ist dem auf der Getriebewelle 2 drehbar angeordneten Getriebezahnrad 4a zugeordnet. Die Schaltungsanordnung 1b ist dem auf der Getriebewelle 2 drehbar angeordneten Getriebezahnrad 4b zugeordnet. Bei dem in Figur 6 gezeigten Zustand befinden sich die Schaltelemente 12a, 12b jeweils in ihrer Mittel- bzw. Neutralstellung, in der sich die Getriebezahnräder 4a, 4b ungehindert auf der Getriebewelle 2 drehen können.

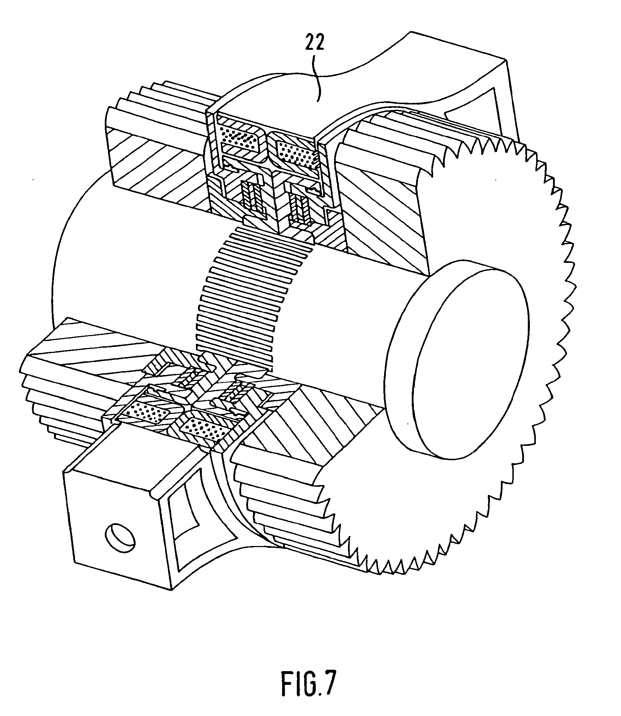

Figur 7 zeigt die Anordnung der Figur 6 in einer Teilschnittdarstellung. Die beiden Schaltungsanordnungen 1a,1b sind in sehr kompakter Weise in einem Trägerteil 22 untergebracht, das im Getriebegehäuse verschraubt werden kann.

Im folgenden wird beschrieben, wie ein Schaltvorgang ablaufen könnte:
- Nach erfolgtem Schaltsignal, das entweder automatisch von einer Elektronik oder durch Antippen eines Wählhebels durch den Fahrer vorgegeben wird, wird zunächst das Drehmoment des Fahrzeugmotors heruntergefahren bzw. abgesenkt.
- Bevor die Kupplung im Antriebsstrang geöffnet wird, können eine oder mehrere Synchronisierungen aktiviert werden, um das Lüftspiel der Lamellen zu reduzieren. Die Schiebemuffe bzw. die Schiebemuffen der zugeordneten Schaltungsanordnungen verlassen dabei ihre rastierte Mittel- bzw. Neutralstellung und schieben die Lamellen zusammen.
- Nach dem Öffnen der Kupplung im Antriebsstrang werden die Ströme der Elektromagneten der am Schaltvorgang beteiligten Schaltungsanordnungen und damit die dort auftretenden Synchronkräfte durch ein elektronisches Steuergerät geregelt.
- Kurz bevor die Drehzahl des gewünschten Gangs erreicht ist, wird der Aktuator, der den Gang einlegen soll, abgeschaltet und durch seine "Rastierfeder" bzw. seine Rastierfederelemente wieder in die Mittel- bzw. Neutralstellung gedrückt.
- Ist die Zieldrehzahl erreicht, wird der Elektromagnet, mit dem der einzulegende Gang geschaltet werden soll, bestromt und zwar in umgekehrter Richtung wie bei Synchronisieren. Der Elektromagnet drückt das zugeordnete Schaltelement bzw. die zugeordnete Schiebemuffe in Richtung des einzulegenden Ganges bzw. des zugeordneten Getriebezahnrads, was dazu führt, dass die Schiebemuffe bzw. das Schaltelement in die Verzahnung des Zahnrads bzw. des zugeordneten Kopplungsrads eingreift.
- Der Elektromagnet wird nun abgeschaltet. Das Schaltelement bzw. die Schiebemuffe wird durch die Rastierfeder in Eingriffsstellung gehalten.
- Nach dem die Kupplung wieder geschlossen ist, werden die übrigen Aktuatoren abgeschaltet und das Motordrehmoment angehoben.
- Da das Schaltelement bzw. die Schiebemuffe und das Mitnehmerelement über eine Schrägverzahnung miteinander drehgekoppelt sind, entsteht eine Axialkraft, die sicherstellt, dass die Verzahnung des Schaltelements auch bei steigendem Drehmoment in die Verzahnung des Kopplungsrads gedrückt wird und somit der Gang auch bei steigendem Motormoment eingelegt bleibt. Der Begriff "Schrägverzahnung" ist in der vorliegenden Beschreibung und in den Patentansprüchen so zu verstehen, dass darunter auch eine "konische Verzahnung" fällt, d.h. eine Verzahnung, bei der das Schaltelement in beiden Drehrichtungen in Richtung des Kopplungsrads gedrückt wird.

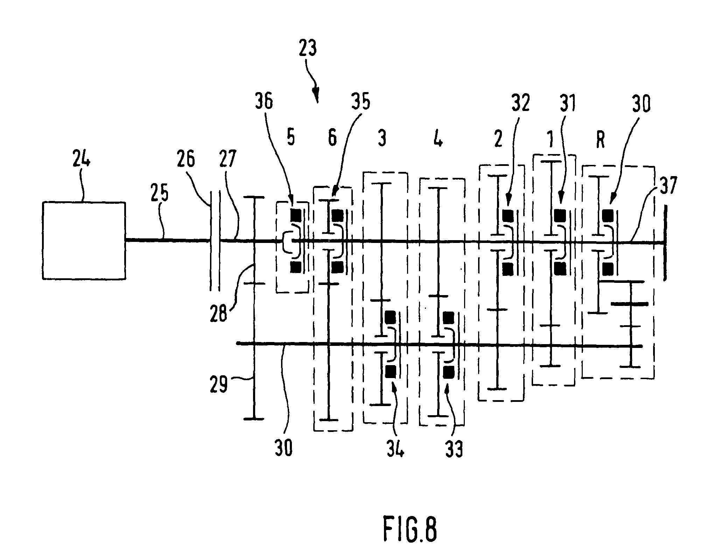

Figur 8 zeigt eine Schaltungsanordnung eines Getriebes 23, das sechs Vorwärtsgänge und einen Rückwärtsgang aufweist. Ein Verbrennungsmotor 24 gibt Drehmoment über eine Motorabtriebswelle 25 und eine Kupplung 26 an eine Getriebewelle 27 ab. Die Getriebewelle 27 treibt über eine Zahnradstufe, 28, 29 eine Vorgelegewelle 30 an. Der Rückwärtsgang R sowie die Vorwärtsgangstufen 1, 2, 3, 4, 6 sind jeweils über eine zugeordnete Zahnradstufe mit einem Festrad und einem Losrad gebildet, das über eine zugeordnete Schaltungsanordnung 30 - 35 synchronisierbar und zuschaltbar ist. Die Vorwärtsgangstufe 5 ist nicht durch eine Zahnradstufe gebildet, sondern stellt einen "Direktgang" dar. Über eine zugeordnete Schaltungsanordnung 36 kann eine Getriebeausgangswelle 37 unmittelbar mit der Getriebeeingangswelle 27 gekoppelt werden.

Die Schaltungsanordnungen 30 - 36 können entsprechend der in Figur 1 gezeigten Schaltungsanordnung ausgeführt sein. Ein wesentlicher Vorteil besteht dann darin, dass die Schaltungsanordnungen 30 - 36 unabhängig voneinander geschaltet werden können. Unabhängig bedeutet, dass gleichzeitig mehrere der Schaltungsanordnungen 30 - 36 in Synchronisierstellung geschaltet werden können und dass gleichzeitig ein Gang ausgelegt und ein anderer Gang eingelegt werden kann. Es sind also zeitliche überschneidende Schaltvorgänge möglich.

Durch den Einsatz von Einzelaktuatoren, die direkt auf der jeweiligen Getriebewelle angeordnet sind, erreicht man im Vergleich zu herkömmlichen automatisierten Handschaltgetrieben einen sehr kompakten Aufbau, was Vorteile hinsichtlich Herstellungskosten, Gewicht und Bauraum hat.

Durch überschneidende Schaltungen und kurze Schaltwege können Schaltnebenzeiten auf ein Minimum reduziert werden. Da mehrere der Schaltungsanordnungen 30 - 36 gleichzeitig in Synchronisierstellung geschaltet werden können, kann eine sehr hohe Synchronisierungsleistung und eine entsprechend kurze Synchronisierzeit erreicht werden.

Ein weiterer wesentlicher Vorteil besteht darin, das die Schaltungsanordnungen 30 - 36 weitgehend identisch aufgebaut sein können. Dies bringt erhebliche Kostenvorteile. Die Anordnung der Gänge und Synchronisierungen kann durch die Ansteuerung mit Einzelaktuatoren im Getriebe frei gewählt werden. Sinnvoll ist eine Anordnung, die den Kraftfluss im Getriebe berücksichtigt und gleichzeitig die zu synchronisierenden Massen möglichst klein hält.

Im folgenden werden nochmals wichtige Vorteile der Erfindung zusammengefasst:

### Geringe Systemkosten:

- Gleicher Radsatz wie bei entsprechendem Haltschaltgetriebe möglich.
- Keine innere Schaltung (Schaltwelle, Schwingen, Rastierung, Verriegelung, etc.) erforderlich.
- Keine Hydraulikbauteile (Pumpe, Tank, Druckspeicher, Ventilblock, etc.) erforderlich.
- Gleiche Synchronisierung für alle Gänge (Ausgleich der Synchronleistung durch Steuerung).
- Geringerer Applikationsaufwand für unterschiedliche Fahrzeuge durch geregelte Ansteuerung.

### Besserer Schaltkomfort:

- Schnelle Reaktionsgeschwindigkeit der Aktuatoren (kurze Schaltwege, schneller Kraftanstieg).
- Geregelte Synchronisierung (Drehzahl als Regelgröße).
- Keine Freiflugphase (Synchronisierung anderer Gänge aktiv bis Kraftschluss erreicht)
- Unabhängige Ansteuerung aller Gänge und Synchronisierungen, d. h. überschneidende Schaltung.
- Lastschaltbarkeit (abhängig von Synchronauslegung).
- Berganfahrhilfe (zwei oder mehr Synchronisierungen können gleichzeitig betätigt werden).

### Kürzere Schaltzeiten:

- durch Reduzierung der Schaltnebenzeiten;
- durch kurze Schaltwege
- durch größere Synchronleistung (Synchronisierungen mehrerer Gänge gleichzeitig nutzbar).
- Bessere Ausnutzung und Dämpfung der Antriebsstrangsschwingungen durch geregelte Schaltabläufe

Ein weiterer wesentlicher Vorteil ist darin zu sehen, dass die Kräfte, d. h. die Synchronisierungs- und Schaltkräfte unmittelbar dort erzeugt werden, wo sie benötigt werden. Zusätzliche Kraftübertragungsteile wie bei herkömmlichen Schaltgetrieben sind nicht erforderlich.

## Patentansprüche

1. Schaltbare Zahnradstufe (1), mit
einer Getriebewelle (2),
einem drehbar zu der Getriebewelle (2) angeordneten Getriebezahnrad (3),
einem Schaltelement (12), das parallel zu einer Axialrichtung der Getriebewelle (2) relativ zur Getriebewelle (2) verschiebbar ist,
einer Synchronisiereinrichtung (7, 8, 13, 14, 15), die durch Verschieben des Schaltelements (12) von einem Passivzustand in einen Aktivzustand geschaltet werden kann, oder umgekehrt, wobei der Aktivzustand dazu vorgesehen ist, die Getriebewelle (2) und das Getriebezahnrad (3) auf ein und dieselbe Drehzahl zu bringen, und
wobei das Schaltelement (12) folgende Schaltstellungen einnehmen kann:
• eine erste Schaltstellung, in der die Getriebewelle (2) und das Getriebezahnrad (3) ungehindert relativ zueinander drehbar sind,
• eine zweite Schaltstellung, in der sich die Synchronisiereinrichtung (7, 8, 13, 14, 15) in ihrem Aktivzustand befindet und
• eine dritte Schaltstellung, in der das Getriebezahnrad (3) drehfest mit der Getriebewelle (2) gekoppelt ist,
**dadurch gekennzeichnet, dass**
die erste Schaltstellung zwischen der zweiten und der dritten Schaltstellung liegt.

2. Schaltbare Zahnradstufe (1) nach Anspruch 1, wobei zum Verschieben des Schaltelements (12) ein Elektromagnet (17) vorgesehen ist.

3. Schaltbare Zahnradstufe (1) nach Anspruch 1 oder 2, wobei das Schaltelement (12) eine ringscheibenartige Ankerplatte (12c) aufweist, die radial von dem Schaltelement (12) absteht.

4. Schaltbare Zahnradstufe (1) nach einem der Ansprüche 1 bis 3, wobei das Schaltelement (12) einen Permanentmagneten (18) aufweist, so dass das Schaltelement (12), je nach Richtung eines durch den Elektromagneten (17) fließenden Stroms, von dem Elektromagneten (17) angezogen oder abgestoßen wird.

5. Schaltbare Zahnradstufe (1) nach Anspruch 4, wobei der Permanentmagnet ein Ringmagnet ist.

6. Schaltbare Zahnradstufe (1) nach Anspruch 5, wobei der Ringmagnet radial magnetisiert ist und der Südpol radial innerhalb des Nordpols liegt, oder umgekehrt.

7. Schaltbare Zahnradstufe (1) nach Anspruch 2, wobei eine Federeinrichtung (16) vorgesehen ist, die beim Verschieben des Schaltelements (12) von der ersten Schaltstellung in die zweite Schaltstellung eine Federkraft erzeugt, welche der Verschiebung des Schaltelements (12) entgegenwirkt, und die beim Ausschalten des Elektromagneten (17) das Schaltelement (12) zurück in die erste Schaltstellung drückt

8. Schaltbare Zahnradstufe (1) nach Anspruch 2, wobei eine Federeinrichtung (16) vorgesehen ist, die das Schaltelement (12) in der dritten Schaltstellung hält, nachdem das Schaltelement (12) in die dritte Schaltstellung verschoben wurde, wobei die Federeinrichtung (16) und der Elektromagnet (17) so aufeinander abgestimmt sind, dass das Schaltelement (12) durch den Elektromagneten (17) entgegen einer von der Federeinrichtung (16) ausgeübten Federkraft zurück in die erste Schaltstellung verschoben werden kann.

9. Schaltbare Zahnradstufe (1) nach einem der Ansprüche 7 oder 8, wobei die Federeinrichtung mindestens ein Federelement (16) mit zwei Schenkeln aufweist, die durch einen Verbindungsabschnitt U-förmig miteinander verbunden sind.

10. Schaltbare Zahnradstufe (1) nach Anspruch 9, wobei der Verbindungsabschnitt eine Ausbuchtung (16a) aufweist, die als Rastnase fungiert.

11. Schaltbare Zahnradstufe (1) nach einem der Ansprüche 7 bis 10, wobei die Federeinrichtung durch einen Ring (21) gebildet ist, an dem mehrere solcher Federelemente (16) angeordnet sind.

12. Schaltbare Zahnradstufe (1) nach Anspruch 11, wobei der Ring (21) ein offener Ring ist.

13. Schaltbare Zahnradstufe (1) nach einem der Ansprüche 1 bis 12, wobei die Synchronisiereinrichtung zwei ineinandereingreifende Konusringe aufweist.

14. Schaltbare Zahnradstufe (1) nach einem der Ansprüche 1 bis 12, wobei die Synchronisiereinrichtung (7, 8, 13, 14, 15) durch eine Lamellenbremse gebildet ist.

15. Schaltbare Zahnradstufe (1) nach Anspruch 14, wobei die Lamellenbremse ein Reibelement (15) aufweist, das drehfest und axialfest mit der Getriebewelle (2) verbunden ist.

16. Schaltbare Zahnradstufe (1) nach einem der Ansprüche 14 oder 15, wobei die Lamellenbremse mindestens eine in Axialrichtung verschieblich angeordnete Lamelle (7, 8) aufweist, die drehfest mit der Getriebewelle (2) gekoppelt ist.

17. Schaltbare Zahnradstufe (1) nach einem der Ansprüche 14 bis 16, wobei die Lamellenbremse mindestens eine in Axialrichtung verschieblich angeordnete Lamelle (13) aufweist, die zumindest mittelbar drehfest mit dem Getriebezahnrad (3) gekoppelt ist.

18. Schaltbare Zahnradstufe (1) nach Anspruch 14, wobei eine Reibfläche der Lamellenbremse durch eine Stirnfläche (14) des Schaltelements (12) gebildet ist.

19. Schaltbare Zahnradstufe (1) nach Anspruch 14, wobei ein topfartiges Mitnehmerelement (10) vorgesehen ist, das drehfest und axialfest mit der Getriebewelle (2) verbunden ist, wobei eine innere Stirnseite (15) des topfartigen Mitnehmerelements (10) ein Reibelement der Lamellenbremse bildet.

20. Schaltbare Zahnradstufe (1) nach Anspruch 19, wobei das Schaltelement (12) mit dem Mitnehmerelement (10) über eine an einer radialen Außenseite des Schaltelements (12) und an einer radialen Innenseite des Mitnehmerelements (10) vorgesehene Axialverzahnung verschieblich aber drehfest verbunden ist.

21. Schaltbare Zahnradstufe (1) nach einem der Ansprüche 7 bis 20, wobei die Federeinrichtung (16) zwischen dem Schaltelement (12) und dem Mitnehmerelement (10) angeordnet ist.

22. Schaltbare Zahnradstufe (1) nach Anspruch 21, wobei die Federeinrichtung (16) zwischen einer radialen Außenseite des Schaltelements (12) und einer radialen Innenseite des Mitnehmerelements (10) angeordnet ist.

23. Schaltbare Zahnradstufe (1) nach einem der Ansprüche 1 bis 22, wobei in der dritten Schaltstellung das Getriebezahnrad (3) mittelbar oder unmittelbar über eine Verzahnung (5) drehfest mit dem Schaltelement (12) gekoppelt ist, wobei sich Zähne der Verzahnung (5) in einer Radialrichtung der Getriebewelle erstrecken.

24. Schaltbare Zahnradstufe (1) nach einem der Ansprüche 19 - 23, wobei die Verzahnung zwischen dem Schaltelement (12) und dem Mitnehmerelement (10) eine Schrägverzahnung ist, die derart ausgebildet ist, dass bei einer Übertragung eines Drehmoments in einer Vorwärtsfahrtrichtung die Radialverzahnung (5) zusammengedrückt wird.

25. Getriebe mit mehreren schaltbaren Zahnradstufen gemäß einem der Ansprüche 1 bis 24.

26. Getriebe nach Anspruch 25, wobei das Getriebe mindestens zwei Zahnradstufen aufweist, die mit Ausnahme der Getriebezahnräder (3) identisch oder spiegelgleich aufgebaut sind.

## Claims

1. A shiftable gear (1) comprising
a gear shaft (2),
a gearwheel (3) mounted for rotation on the gear shaft (2),
a shift element (12) movable relative to the gear shaft (2) and parallel to an axial direction of the gear shaft (2),
a synchronisation device (7, 8, 13, 14, 15), switchable by moving the shift element (12) from a passive state to an active state or vice versa, the purpose of the active state being to bring the gear shaft (2) and the gearwheel (3) to the same speed of rotation, and
wherein the shift element (12) can occupy the following positions:
a first position in which the gear shaft (2) and the gearwheel (3) are freely rotatable relative to one another,
a second position in which the synchronisation device (7, 8, 13, 14, 15) is in the active state and
a third position in which the gearwheel (3) is co-rotatably coupled to the gear shaft (2),
**characterised in that**
the first position lies between the second and the third position.

2. A shiftable gear (1) according to claim 1, wherein an electromagnet (17) is provided for moving the shift element (12).

3. A shiftable gear (1) according to claim 1 or claim 2, wherein the shift element (12) comprises an annular armature plate (12c) which projects radially from the shift element (12).

4. A shiftable gear (1) according to any of claims 1 to 3, wherein the shift element (12) comprises a permanent magnet so that the shift element (12) can be attracted or repelled by the electromagnet (17) depending on the direction of a current flowing through the electromagnet (17).

5. A switchable gear (1) according to claim 4, wherein the permanent magnet is an annular magnet.

6. A switchable gear (1) according to claim 5, wherein the annular magnet is radially magnetised and the south pole lies radially inside the north pole or vice versa.

7. A switchable gear (1) according to claim 2, wherein a spring device (1 6), when moving the shift element (12) from the first position to the second position, exerts a spring force which counteracts the displacement of the shift element (12), whereas when the electromagnet (17) is switched off the spring element pushes the shift element (12) back into the first position.

8. A shiftable gear (1) according to claim 2, wherein a spring device (16) holds the shift element (12) in the third position after the shift element (12) has been moved into the said third position, wherein the spring device (16) and the electromagnet (17) are adapted to one another so that the shift element (12) can be moved by the electromagnet (17) against a spring force exerted by the spring device (16) and back to the first position.

9. A shiftable gear (1) according to claim 7 or claim 8, wherein the spring device comprises at least one spring element (16) with two legs connected together in a U shape by a connecting portion.

10. A shiftable gear (1) according to claim 9, wherein the connecting portion has a bulge (16a) which acts as a stop or catch.

11. A shiftable gear (1) according to any of claims 7 to 10, wherein the spring device is a ring (21) on which a number of said spring elements (16) are disposed.

12. A shiftable gear (1) according to claim 11, wherein the ring (21) is an open ring.

13. A shiftable gear (1) according to any of claims 1 to 12, wherein the synchronisation device comprises two interlocking cone rings.

14. A shiftable gear (1) according to claims 1 to 12, wherein the synchronisation device (7, 8, 13, 14, 15) is in the form of a multiple-disc brake.

15. A shiftable gear (1) according to claim 14, wherein the multiple-disc brake comprises a friction element (15) co-rotatably and coaxially connected to the gear shaft (2).

16. A shiftable gear (1) according to claim 14 or claim 15, wherein the multiple-disc brake comprises at least one disc (7,8) movable in the axial direction and co-rotatably connected to the gear shaft (2).

17. A shiftable gear (1) according to any of claims 14 to 16, wherein the multiple-disc brake comprises at least one disc (13) movable in the axial direction and at least indirectly coupled co-rotatably to the gearwheel (3).

18. A shiftable gear (1) according to claim 14, wherein a friction surface of the multiple-disc brake is in the form of an endface (14) of the shift element (12).

19. A shiftable gear (1) according to claim 14, wherein a pot-shaped driving element (10) is co-rotatably and coaxially connected to the gear shaft (2), wherein an inner endface (15) of the pot-shaped driving element (10) forms a friction element of the multiple-disc brake.

20. A shiftable gear (1) according to claim 19, wherein the shift element (12) is movably but co-rotatably connected to the driving element (10) via axial teeth on a radial outer side of the shift element (12) and on a radial inner side of the driving element (10).

21. A shiftable gear (1) according to any of claims 7 to 20, wherein the spring device (16) is disposed between the shift element (12) and the driving element (10).

22. A shiftable gear (1) according to claim 21, wherein the spring device (16) is disposed between a radial outer side of the shift element (12) and a radial inner side of the driving element (10).

23. A shiftable gear (1) according to any of claims 1 to 22, wherein in the third position the gearwheel (3), directly or indirectly, is co-rotatably coupled to the shift element (12) by teeth (5), wherein some teeth (5) extend in a radial direction of the gear shaft.

24. A shiftable gear (1) according to any of claims 19 - 23, wherein the teeth between the shift element (12) and the driving element (10) have helical gearing such that when torque is transmitted in a forward motion direction the radial teeth (5) are compressed.

25. A gear unit comprising a number of shiftable gears according to any of claims 1 to 24.

26. A gear unit according to claim 25, wherein the gear unit comprises at least two gears which are identical or mirror images except for the gearwheels (3).

## Revendications

1. Etage d'engrenage commutable (1), comprenant :
un arbre de transmission (2),
un engrenage de boîte de vitesses (3) disposé de façon rotative par rapport à l'arbre de transmission (2),
un élément de commutation (12) mobile par rapport à l'arbre de transmission (2) parallèlement à une direction axiale de l'arbre de transmission (2),
un dispositif de synchronisation (7, 8, 13, 14, 15) qui peut être commuté par déplacement de l'élément de commutation (12) d'un état passif dans un état actif, ou inversement, l'état actif étant prévu pour amener l'arbre de transmission (2) et l'engrenage de boîte de vitesses (3) à un seul et même régime, et
l'élément de commutation (12) pouvant adopter les positions de commutation suivantes :
• une première position de commutation dans laquelle l'arbre de transmission (2) et l'engrenage de boîte de vitesses (3) peuvent tourner sans entrave l'un par rapport à l'autre,
• une deuxième position de commutation dans laquelle le dispositif de synchronisation (7, 8, 13, 14, 15) se trouve dans son état actif, et
• une troisième position de commutation dans laquelle l'engrenage de boîte de vitesses (3) est couplé de façon solidaire en rotation avec l'arbre de transmission (2),
**caractérisé en ce que**
la première position de commutation se trouve entre la deuxième et la troisième position de commutation.

2. Etage d'engrenage commutable (1) selon la revendication 1, dans lequel on prévoit un électro-aimant (17) pour déplacer l'élément de commutation (12).

3. Etage d'engrenage commutable (1) selon la revendication 1 ou 2, dans lequel l'élément de commutation (12) présente une plaque d'induit en forme de disque annulaire (12c), qui fait saillie radialement hors de l'élément de commutation (12).

4. Etage d'engrenage commutable (1) selon l'une des revendications 1 à 3, dans lequel l'élément de commutation (12) présente un aimant permanent (18), de telle sorte que l'élément de commutation (12), selon le sens d'un courant traversant l'électro-aimant (17), est attiré ou repoussé par l'électro-aimant (17).

5. Etage d'engrenage commutable (1) selon la revendication 4, dans lequel l'aimant permanent est un aimant annulaire.

6. Etage d'engrenage commutable (1) selon la revendication 5, dans lequel l'aimant annulaire est magnétisé radialement et le pôle sud se trouve radialement à l'intérieur du pôle nord, ou inversement.

7. Etage d'engrenage commutable (1) selon la revendication 2, dans lequel on prévoit un dispositif de ressort (16) qui, lors du déplacement de l'élément de commutation (12) de la première position de commutation dans la deuxième position de commutation, génère une force de ressort qui agit à l'encontre du déplacement de l'élément de commutation (12) et qui, lors de la désactivation de l'électro-aimant (17), repousse l'élément de commutation (12) dans la première position de commutation.

8. Etage d'engrenage commutable (1) selon la revendication 2, dans lequel on prévoit un dispositif de ressort (16) qui maintient l'élément de commutation (12) dans la troisième position de commutation une fois que l'élément de commutation (12) a été déplacé dans la troisième position de commutation, le dispositif de ressort (16) et l'électro-aimant (17) étant ajustés l'un à l'autre de telle sorte que l'élément de commutation (12) peut être ramené dans la première position de commutation par l'électro-aimant (17) à l'encontre d'une force de ressort exercée par le dispositif de ressort (16).

9. Etage d'engrenage commutable (1) selon l'une des revendications 7 ou 8, dans lequel le dispositif de ressort présente au moins un élément de ressort (16) avec deux branches reliées entre elles en forme de U par une section de liaison.

10. Etage d'engrenage commutable (1) selon la revendication 9, dans lequel la section de liaison présente une échancrure (16a) servant de bec d'engagement.

11. Etage d'engrenage commutable (1) selon l'une des revendications 7 à 10, dans lequel le dispositif de ressort est formé par une bague (21) au niveau de laquelle sont disposés plusieurs éléments de ressort (16).

12. Etage d'engrenage commutable (1) selon l'une des revendications 1 à 12, dans lequel la bague (21) est une bague ouverte.

13. Etage d'engrenage commutable (1) selon l'une des revendications 1 à 12, dans lequel le dispositif de synchronisation présente deux bagues coniques s'engageant l'une dans l'autre.

14. Etage d'engrenage commutable (1) selon l'une des revendications 1 à 12, dans lequel le dispositif de synchronisation (7, 8, 13, 14, 15) est formé par un frein à disques.

15. Etage d'engrenage commutable (1) selon la revendication 14, dans lequel le frein à disques présente un élément de friction (15) relié de manière solidaire en rotation et solidaire axialement à l'arbre de transmission (2).

16. Etage d'engrenage commutable (1) selon l'une des revendications 14 ou 15, dans lequel le frein à disques présente au moins un disque (7, 8) disposé de façon mobile en direction axiale, couplé de façon solidaire en rotation à l'arbre de transmission (2).

17. Etage d'engrenage commutable (1) selon l'une des revendications 14 à 16, dans lequel le frein à disques présente au moins un disque (13) disposé de façon mobile en direction axiale, couplé au moins indirectement de façon solidaire en rotation à l'engrenage de boîte de vitesses (3).

18. Etage d'engrenage commutable (1) selon la revendication 14, dans lequel une surface de friction du frein à disques est formée par une face frontale (14) de l'élément de commutation (12).

19. Etage d'engrenage commutable (1) selon la revendication 14, dans lequel on prévoit un élément d'entraînement (10) en forme de pot relié de façon solidaire en rotation et solidaire axialement à l'arbre de transmission (2), une face frontale intérieure (15) de l'élément d'entraînement (10) en forme de pot formant un élément de friction du frein à disques.

20. Etage d'engrenage commutable (1) selon la revendication 19, dans lequel l'élément de commutation (12) est relié de façon mobile mais solidaire en rotation à l'élément d'entraînement (10) via une denture axiale prévue au niveau d'une face extérieure radiale de l'élément de commutation (12) et au niveau d'une face intérieure radiale de l'élément d'entraînement (10).

21. Etage d'engrenage commutable (1) selon l'une des revendications 7 à 20, dans lequel le dispositif de ressort (16) est disposé entre l'élément de commutation (12) et l'élément d'entraînement (10).

22. Etage d'engrenage commutable (1) selon la revendication 21, dans lequel le dispositif de ressort (16) est disposé entre une face extérieure radiale de l'élément de commutation (12) et une face intérieure radiale de l'élément d'entraînement (10).

23. Etage d'engrenage commutable (1) selon l'une des revendications 1 à 22, dans lequel dans la troisième position, l'engrenage de boîte de vitesses (3) est couplé indirectement ou directement via une denture (5), de façon solidaire en rotation, à l'élément de commutation (12), des dents de la denture (5) s'étendant dans une direction radiale de l'arbre de transmission.

24. Etage d'engrenage commutable (1) selon l'une des revendications 19 à 23, dans lequel la denture entre l'élément de commutation (12) et l'élément d'entraînement (10) est une denture oblique, configurée de telle sorte que la denture radiale (5) est compressée lors d'une transmission d'un couple dans la direction avant.

25. Boîte de vitesses comprenant plusieurs étages d'engrenage commutables selon l'une des revendications 1 à 24.

26. Boîte de vitesses selon la revendication 25, dans laquelle la boîte de vitesses présente au moins deux étages d'engrenage qui, à l'exception des engrenages de boîte de vitesse (3), sont conçus de façon identique ou similaire.
